# EUROPÄISCHE PATENTSCHRIFT

(11) **EP 2 715 836 B1**
(45) Veröffentlichungstag und Bekanntmachung des Hinweises auf die Patenterteilung: **08.04.2015**
(21) Anmeldenummer: 12722682.7
(22) Anmeldetag: 12.05.2012
(51) Int. Cl.: H01M 2/10, H01M 2/20, H01M 10/48, H01M 10/04, H01M 10/42, H01M 10/613, H01M 10/625, H01M 10/647, H01M 10/6567, H01M 10/6556, H01M 10/6554, H01M 10/6553, H01M 10/6551

(54) **AKKUBLOCK AUS PRISMATISCHEN ZELLEN**
RECHARGEABLE BATTERY BLOCK COMPRISING PRISMATIC CELLS
BLOC ACCUMULATEUR CONSTITUÉ D'ÉLÉMENTS PRISMATIQUES

(30) Priorität: 30.05.2011 DE 102011103569; 09.06.2011 DE 102011106116
(43) Veröffentlichungstag der Anmeldung: 09.04.2014
(73) Patentinhaber: ads-tec GmbH, 72622 Nürtingen (DE)
(72) Erfinder: SPEIDEL, Thomas, 71706 Markgröningen (DE)
(74) Vertreter: Wasmuth, Rolf
(86) Internationale Anmeldenummer: PCT/EP2012/002053
(87) Internationale Veröffentlichungsnummer: WO 2012/163475

(56) Entgegenhaltungen:
- DE-A1-102009 035 458
- JP-A- 2011 040 332
- US-A1- 2006 270 286
- US-A1- 2010 062 329

## Beschreibung

Die Erfindung betrifft einen Akkublock aus einer Vielzahl einzelner Akkuzellen, die in einem gemeinsamen Gehäuse angeordnet sind, nach dem Oberbegriff des Anspruchs 1.

Die in einem Akkublock angeordneten einzelnen Akkuzellen müssen mechanisch sicher fixiert sein, damit sie sich bei äußeren Kraft- und Vibrationseinwirkungen nur wenig bewegen. Andererseits muss gewährleistet sein, dass die Akkuzellen ausreichend Freiraum haben, da sie im elektrischen Betrieb ihr Volumen geringfügig verändern. Dieses "Atmen" der einzelnen Akkuzellen führt im Verbund zu nicht unerheblichen Kräften und zu Relativbewegungen untereinander. Dadurch sind im Betrieb eines Akkublocks die elektrischen Verbindungen der Anschlusspole nicht nur elektrisch, sondern auch mechanisch belastet.

Aus der US 2006/0270286 A1 ist eine Kontaktbrücke zur elektrischen Verbindung von Anschlusspolen eines Akkublocks bekannt. Die Kontaktbrücke weist eine Polöffnung für einen Anschlusspol auf, wobei in der Polöffnung eine zu einem Ring geformte Schraubenfeder als Kontaktelement gehalten ist. Die Kontaktkraft ist eine Federkraft, die unter mechanischen und thermischen Einflüssen undefiniert wird, so dass eine sichere, dauerhafte Kontaktierung nicht gewährleistet werden kann.

Der Erfindung liegt die Aufgabe zugrunde, einen Akkublock der gattungsgemäßen Art derart auszubilden, dass unter allen Betriebsbedingungen eine sichere elektrische Kontaktierung gewährleistet ist.

Die Aufgabe wird erfindungsgemäß nach den kennzeichnenden Merkmalen des Anspruchs 1 gelöst.

Ein Polabschnitt eines Anschlusspols ragt in eine Polöffnung der Kontaktbrücke ein, wobei zwischen dem Außenumfang des Polabschnitts und der zugewandten Wandung der Polöffnung ein Spiel ausgebildet ist, also ein Spalt besteht. Das freie Ende des Polabschnitts ist elektrisch leitend mit einer Kontaktplatte verbunden, die über zumindest einen elastischen Kontaktarm elektrisch leitend an der Kontaktbrücke festgelegt ist und die elektrische Verbindung zwischen dem Anschlusspol und der Kontaktbrücke herstellt. Der Kontaktarm überbrückt den Spalt zwischen dem Polabschnitt und der Kontaktbrücke, wodurch im Rahmen des Spiels zwischen dem Polabschnitt und der Polöffnung eine Relativbewegung eines Anschlusspols eines Akkublocks relativ zur Kontaktbrücke möglich ist. Dadurch ist sichergestellt, dass im Betrieb auftretende Relativbewegungen der Anschlusspole untereinander nicht zu hohen mechanischen Kräften an den Polen führen. Der Spalt zwischen dem Polabschnitt und der Polöffnung lässt ausgleichende Relativbewegungen zu.

Vorzugsweise ist die Kontaktplatte auf der Stirnseite des Polabschnitts elektrisch leitend festgelegt, insbesondere festgeschweißt. Dadurch wird eine gute elektrische Verbindung verbunden mit einer hohen mechanischen Festigkeit erzielt. Der vorteilhaft aus einem elastisch federnden Material ausgebildete Kontaktarm hat zweckmäßig eine elastische federnde Gestalt, insbesondere einen etwa S-förmigen Verlauf, wobei die Elastizität des elektrisch leitenden Materials der Kontaktplatte mit den Kontaktarmen ausreichend ist, um die auftretenden Relativbewegungen elastisch abzufangen. Dabei können Materialeigenschaften ausgenutzt werden, die sich z. B. aufgrund des fließenden elektrischen Stroms einstellen oder aufgrund der Erwärmung eines Kontaktarms.

Bevorzugt liegt die Kontaktbrücke auf zumindest einer Teilfläche der Stirnseite eines Anschlusspols lediglich auf, so dass die Kontaktbrücke auf der Stirnseite des Anschlusspols beweglich bleibt. Um eine geringe Reibung zwischen der Kontaktbrücke und der Stirnseite des Anschlusspols zu gewährleisten, wird ein entsprechendes Zwischenelement eingelegt, welches die Reibung reduziert. Dieses Zwischenelement ist bevorzugt ein wärmeübertragendes Element, insbesondere ein Gelkissen, wodurch eine enge, gut Wärme übertragende Verbindung zwischen der Kontaktbrücke und dem Anschlusspol der Akkuzelle erzielt ist.

Der Polabschnitt weist zweckmäßig einen Durchmesser auf, der kleiner als der Durchmesser des Anschlusspols ist, so dass sich eine Ringfläche zur Auflage der Kontaktbrücke ergibt. Der Polabschnitt kann in den Anschlusspol eingeschraubt sein oder einteilig mit dem Anschlusspol der Akkuzelle ausgebildet sein. Zweckmäßig werden dabei der Polabschnitt und die Polöffnung zumindest teilzylindrisch gestaltet, wobei in bevorzugter Ausgestaltung der Polabschnitt vollzylindrisch und die Polöffnung als durchgehende, zylindrische Bohrung in der Kontaktbrücke ausgebildet ist.

In Weiterbildung der Erfindung ist an der Kontaktplatte ergänzend eine einteilig angeformte, federnde Kontaktzunge ausgebildet, die der elektrischen Verbindung mit einer Platine eines Batteriemanagementsystems dient. Um eine Vibrationsentkopplung einerseits und einen Ausgleich von Maßabweichungen andererseits zu gewährleisten, ist die Kontaktzunge an dem freien Ende eines von der Kontaktplatte abgewinkelten Materialstreifens angebunden, so dass sich die Kontaktzunge relativ zur Kontaktplatte elastisch verlagern kann. Dabei liegt die Kontaktzunge in einer zur Kontaktplatte etwa parallelen Ebene. Zur festen mechanischen Verbindung mit der Platine des Batteriemanagementsystems ist die Kontaktzunge vorteilhaft mit einem Schraubanschluss ausgebildet.

Nach einer eigenständigen Erfindung ist eine Anordnung aus prismatisch ausgebildeten Akkuzellen durch eine elastische Spannvorrichtung derart fixiert, dass die Anordnung eine händelbare mechanische Baueinheit bildet. Die Spannvorrichtung besteht vorteilhaft aus die Anordnung begrenzenden Spannplatten, die von einem die Spannplatten und die Anordnung verspannenden Zugband umgeben sind. Dadurch ist einerseits eine stabile, selbsttragende Anordnung aus Akkuzellen als Baueinheit gebildet, die dennoch innerhalb der Anordnung ein "Atmen" der einzelnen Akkuzellen gewährleistet, da das elastische Zugband entsprechend nachgibt.

Nach einer weiteren Erfindung ist die Anordnung der Akkuzellen, insbesondere die Spannvorrichtung von einem Quell-Dichtband (Kompriband) umgeben, welches einen Einbauspalt zwischen der in der Spannvorrichtung gehaltenen Anordnung der Akkuzellen und einem aufnehmenden Gehäuse etwa spielfrei ausfüllt. Das Quell-Dichtband wird vor dem Einsetzen der Anordnung in ein Gehäuse auf die Außenflächen aufgebracht und danach die Anordnung in das Gehäuse eingesetzt. Nach dem Aufbringen dehnt sich das Quell-Dichtband langsam aus, bis es den Einbauspalt vollständig ausfüllt und eine spielfreie, vibrationsarme Halterung der Anordnung aus Akkuzellen im Gehäuse gewährleistet. Da das Quell-Dichtband seine Elastizität beibehält, ist auch nach der Montage in das Gehäuse eine Relativbewegung der Akkuzellen untereinander möglich, wie sie regelmäßig aufgrund von Volumenänderungen einzelner Akkuzellen im Betrieb auftreten.

Weitere Merkmale der Erfindungen ergeben sich aus den weiteren Ansprüchen, der Beschreibung und der Zeichnung, in der nachfolgend im Einzelnen beschriebene Ausführungsbeispiele der Erfindungen dargestellt sind. Es zeigen:
- Fig. 1: in perspektivischer Ansicht eine Anordnung von Akkuzellen in einer Spannvorrichtung,
- Fig. 2: die Anordnung nach Fig. 1 mit einem die Anordnung umgebenden Quell-Dichtband,
- Fig. 3: eine Draufsicht auf ein Gehäuse mit der eingesetzten Anordnung aus Akkuzellen,
- Fig. 4: eine perspektivische Ansicht auf eine in einem Gehäuse aufgenommene Anordnung aus Akkuzellen mit einer aus Kühlkörpern und Kontaktbrücken zusammengesetzten mäanderförmigen Kühlschlange,
- Fig. 5: eine schematische Darstellung der Anordnung aus Akkuzellen mit Kühlboden und Kühldeckel,
- Fig. 6: eine perspektivische Ansicht eines Beispiels der Anordnung einer Kontaktbrücke zur elektrischen Verbindung von Anschlusspolen benachbarter Akkuzellen,
- Fig. 7: eine vergrößerte Ansicht der Kontaktbrücke nach Fig. 6,
- Fig. 8: einen Schnitt längs der Linie VIII-VIII in Fig. 7,
- Fig. 9: eine schematische Ansicht eines Kontaktelementes aus einer Kontaktplatte mit Kontaktarmen,
- Fig. 10: eine schematische Ansicht eines Kontaktelementes nach Fig. 9 mit einer angeformten Kontaktzunge zur elektrischen Kontaktierung mit einer Überwachungsschaltung,
- Fig. 11: die Anordnung einer Kontaktbrücke zwischen benachbarten Anschlusspolen mit einem Kontaktelement und einer angeformten Kontaktzunge,
- Fig. 12: eine Draufsicht auf ein geöffnetes Gehäuse mit darin aufgenommener Anordnung aus Akkuzellen.

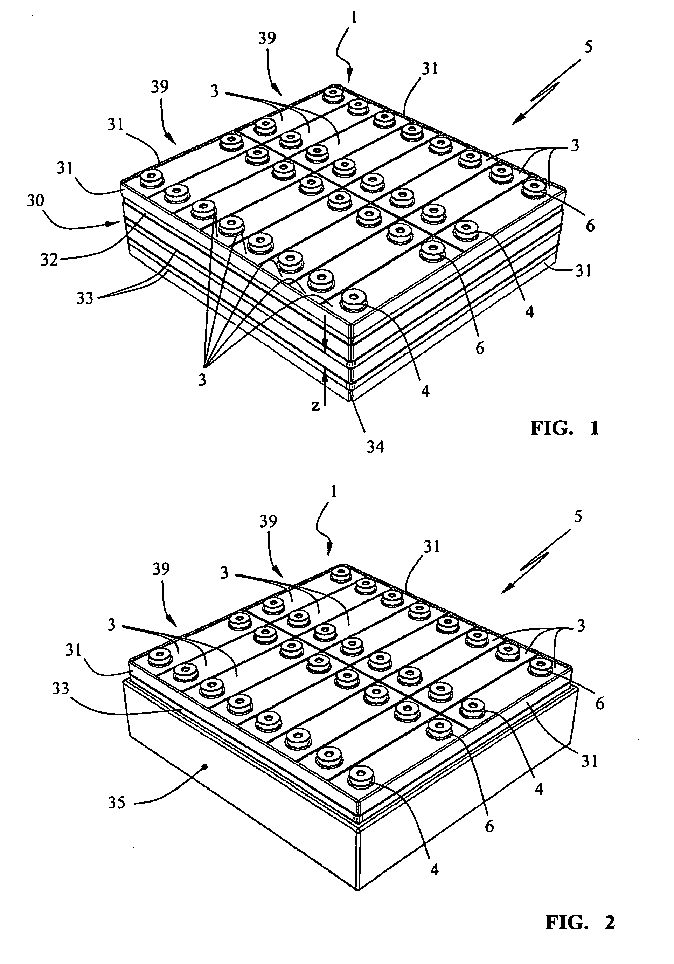

In Fig. 1 ist als Ausführungsbeispiel eine Anordnung 5 aus einer Vielzahl von Akkuzellen 3 gezeigt, wobei zwei Reihen 39 von je acht Akkuzellen 3 vorgesehen sind. Auch andere Gestaltungen von z. B. zweimal 12 Zellen oder dgl. sind möglich.

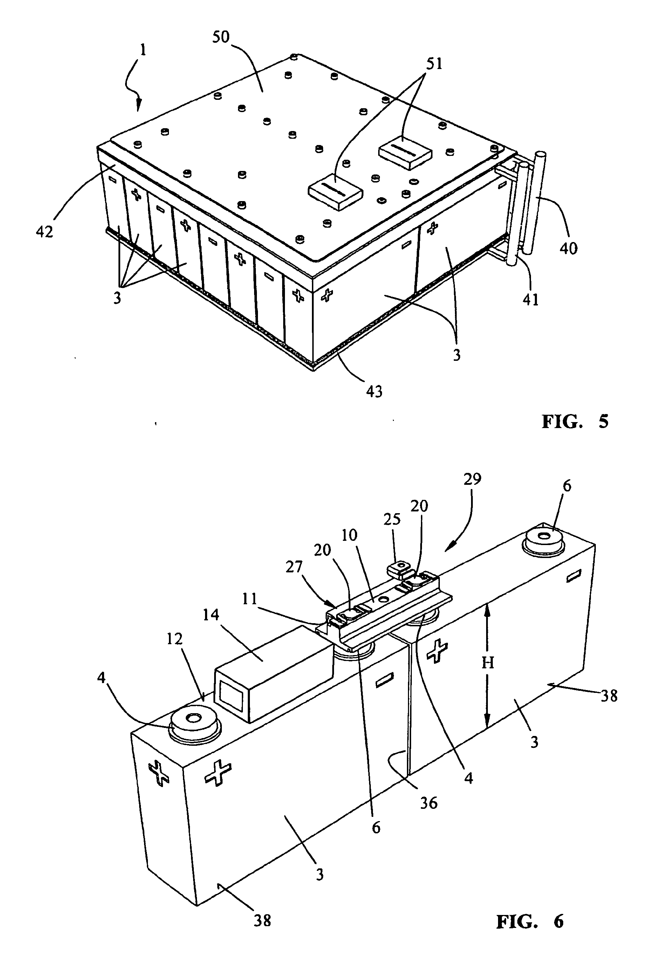

Wie Fig. 6 zeigt, haben die Akkuzellen 3 des Ausführungsbeispiels quaderförmige Grundform und werden auch als prismatische Akkuzellen bezeichnet.

Die Akkuzellen einer Reihe liegen Flachseite 38 an Flachseite; in den beiden Reihen 39 liegen die Akkuzellen mit ihren Schmalseiten 36 aneinander an.

Damit die Anordnung 5 einen weitgehend stabilen mechanischen Verbund bildet, sind auf jeder Außenseite der Anordnung 5 Spannplatten 31 angeordnet, die etwa der Höhe H (Fig. 6) einer prismatischen Akkuzelle 3 entsprechen und jeweils an den Flachseiten 38 bzw. den Schmalseiten 36 anliegen. An den Stoßkanten 34 der Spannplatten 31 ist so viel Spiel gegeben, dass die über Zugbänder 33 aufgebrachten Zugkräfte auf die Anordnung 5 der Akkuzellen 3 wirken können. Ein vorzugsweise endloses Zugband 33 geeigneten Durchmessers wird über die Anordnung 5 gezogen und liegt in Haltenuten 32, die sich über alle vier Spannplatten 31 der Anordnung 5 erstrecken. Im gezeigten Ausführungsbeispiel sind zwei von drei anzuordnenden Zugbändern 33 dargestellt, die mit einem seitlichen Abstand z zueinander liegen. Die durch die Spannplatten 31 und die Zugbänder 33 gebildete elastische Spannvorrichtung 30 fixiert die Anordnung 5 der prismatischen Akkuzellen 3 zu einem stabilen Paket, das als mechanisch stabile Baueinheit gehändelt werden kann.

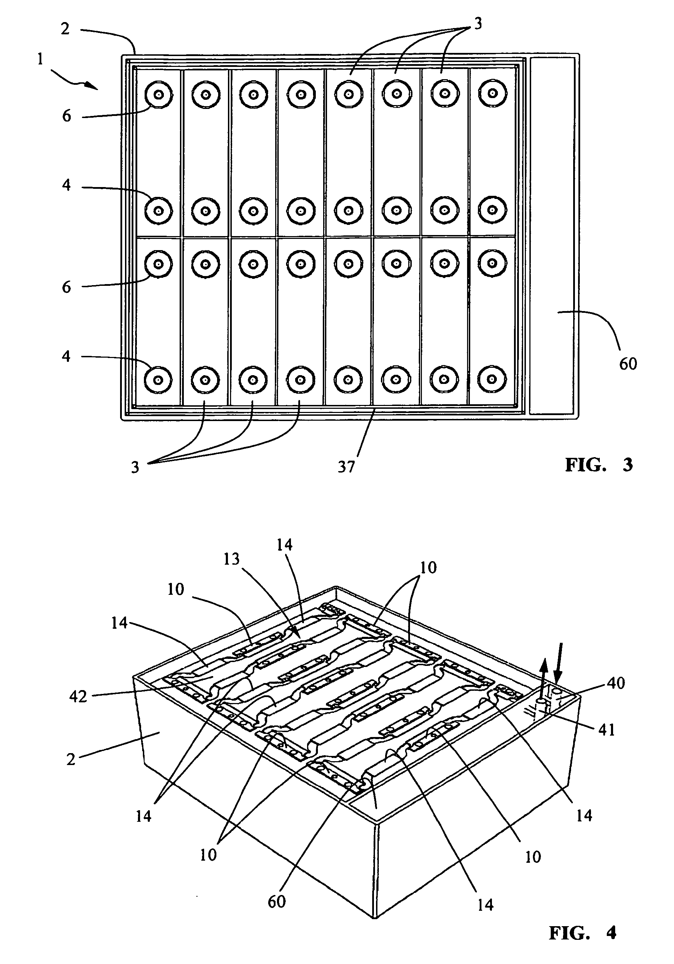

Die durch die Spannvorrichtung 30 gebildete Baueinheit wird in ein Gehäuse 2 eingesetzt, wie in den Figuren 3 und 4 wiedergegeben. Das Gehäuse 2 ist von den Innenmaßen geringfügig größer als die Anordnung 5 mit der Spannvorrichtung 30 ausgebildet, so dass zwischen den Wänden des Gehäuses 2 und der durch die Spannvorrichtung 30 gebildeten Anordnung aus prismatischen Akkuzellen 3 ein Einbauspalt 37 ausgebildet ist, der das Einsetzen der Anordnung 5 in das Gehäuse 2 erleichtert. Um die Anordnung 5 innerhalb des Gehäuses 2 spielfrei zu halten, wird auf der Außenseite der Spannvorrichtung 30, also den Außenseiten der Spannplatten 31, ein Quell-Dichtband 35 (Kompriband) angeordnet, z. B. aufgeklebt. Nach Montage des Quell-Dichtbandes 35, welches zunächst eine Stärke aufweist, die geringer als der Einbauspalt 37 ist, wird die vorbereitete Anordnung 5 in das Gehäuse 2 eingesetzt. Das Quell-Dichtband 35 dehnt sich langsam aus, bis der Einbauspalt 37 vollständig von dem Quell-Dichtband 35 (Kompriband) ausgefüllt ist und die Anordnung 5 spielfrei im Einbauraum des Gehäuses 2 gehalten ist. Da das Quell-Dichtband 35 elastisch ist, bildet es gleichzeitig einen Vibrationsschutz.

Wie die Figuren 1 und 2 zeigen, liegen alle Anschlusspole der Akkuzellen 3 auf einer Flachseite der Anordnung 5. Elektrisch zu verbindende Anschlusspole 4, 6, z. B. benachbart liegende Anschlusspole 4, 6 - die im Ausführungsbeispiel unterschiedliche Polarität haben - werden über eine Kontaktbrücke 10 (Fig. 6) aus elektrisch leitendem Material miteinander elektrisch verbunden. In Fig. 4 sind diese gekühlten Kontaktbrücken 10 zu erkennen.

Längs jeder Kontaktbrücke 10 ist ein Kühlkanal 11 ausgebildet, der Teil einer mäanderförmig geführten Kühlschlange 13 ist, in der alle Kühlkanäle 11 aller gekühlten Kontaktbrücken 10 hintereinander in Reihe geschaltet sind. Zwischen je zwei gekühlten Kontaktbrücken 10 ist ferner ein Kühlkörper 14 vorgesehen, der auf der Flachseite 12 einer Akkuzelle 3 wärmeübertragend aufliegt (Fig. 6) und dessen Kühlkanal in Reihe mit den Kühlkanälen 11 der Kontaktbrücken 10 in die Kühlschlange 13 eingebunden ist.

Die Kühlschlange 13 wird von einem Zufluss 40 gespeist; über den Abfluss 41 wird das Kühlmedium, insbesondere eine Kühlflüssigkeit in einem Kühlkreislauf abgeführt.

Der Zufluss 40 und der Abfluss 41 des Kühlmittels liegen in einem im Gehäuse 2 ausgebildeten Funktionsraum 60, in dem auch weitere Anschlüsse - z. B. elektrische Anschlüsse - vorgesehen sein können.

Die im Ausführungsbeispiel mäanderförmig ausgebildete Kühlschlange 13 ist in einem Deckel 42 ausgebildet, in dem die Kontaktbrücken 10 und die Kühlkörper 14 eingegossen sind.

Wie in Fig. 5 angedeutet, stehen die Akkuzellen 3 auf einem Kühlboden 43, der ebenfalls an den Zufluss 40 und den Abfluss 41, also den Kreislauf des Kühlmediums, angeschlossen ist. Die Akkuzellen 3 werden somit auf gegenüberliegenden Flachseiten durch den Kühlboden 43 und den Kühldeckel 42 während des Betriebs gekühlt, so dass ein zu großer Temperaturanstieg in den einzelnen Akkuzellen 3 vermieden ist.

Jede Akkuzelle 3 dehnt sich im Betrieb unter elektrischer Last mechanisch leicht aus, so dass zweckmäßig eine Relativbewegung der Akkuzellen 3 innerhalb der Anordnung 5 möglich sein sollte. Die elastischen Zugbänder 33 der erfindungsgemäßen Spannvorrichtung 30 lassen ein Ausdehnen der Anordnung 5 aus Akkuzellen 3 ebenso zu wie das nach einer eigenständigen Erfindung angeordnete Quell-Dichtband 35 (Fig. 2), welches den Einbauspalt 37 zwischen der Anordnung 5 und dem Gehäuse 2 etwa spielfrei ausfüllt. Dieses "Atmen" der Akkuzellen 3 im Betrieb führt auch zu kleinen Lageveränderungen der über eine Kontaktbrücke 10 elektrisch miteinander verbundenen Anschlusspole 4 und 6.

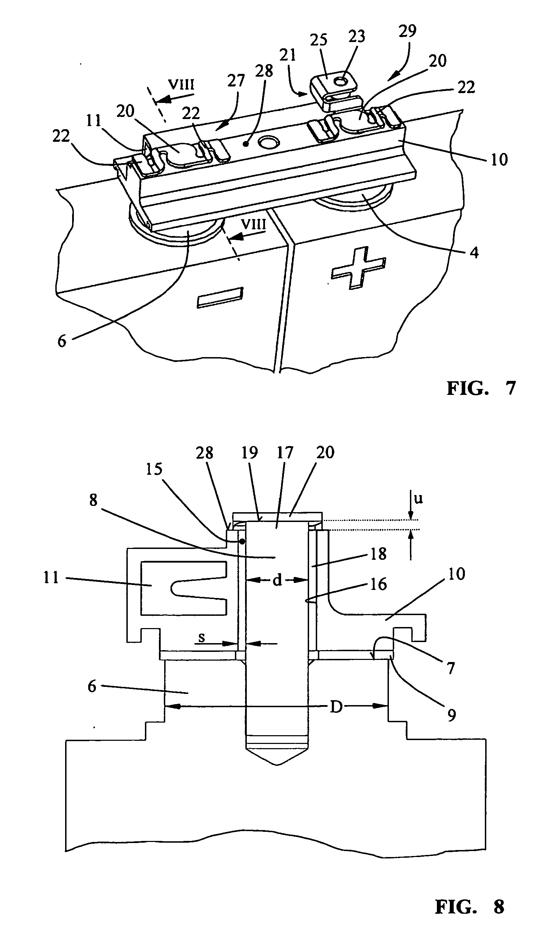

Damit die über eine Kontaktbrücke 10 miteinander elektrisch verbundenen Anschlusspole 4 und 6 zueinander Relativbewegungen ausführen können, liegen die Kontaktbrücken 10 auf zumindest Teilbereichen der Stirnseiten 7 der Anschlusspole 4, 6 auf, wobei ein Polabschnitt 8 eines jeweiligen Anschlusspols 4 bzw. 6 mit Spiel s in eine Polöffnung 18 der Kontaktbrücke 10 einragt. Als Polöffnung kann eine Vertiefung, eine Hohlkehle, eine Ausnehmung oder dgl. in der Kontaktbrücke vorgesehen sein, in die ein entsprechend gestalteter Polabschnitt zumindest teilweise aufgenommen ist. Zwischen dem Außenumfang des Polabschnitts und der zugewandten Wandung der Polöffnung ist das Spiel vorgesehen, so dass zwischen dem Polabschnitt und der Polöffnung ein Spalt ausgebildet ist. Im dargestellten Ausführungsbeispiel der Erfindung ist der Polabschnitt 8 mit einen Durchmesser d ausgebildet, der kleiner als der Durchmesser D des Anschlusspols 4, 6 ist (Fig. 8). Die Polöffnung 18 ist eine in der Kontaktbrücke 10 ausgebildete, durchgehende zylindrische Öffnung, die von dem vorzugsweise ebenfalls zylindrischen Polabschnitt 8 durchragt wird. Vorteilhaft steht das freie Ende 17 des Polabschnitts 8 um ein Maß u über die Oberseite 28 der Kontaktbrücke 10 vor. Zwischen dem Polabschnitt 8 und der Innenwandung 16 der Polöffnung 18 ist somit ein Spalt 15 gebildet, so dass eine Relativbewegung zwischen der Kontaktbrücke 10 und den jeweiligen Anschlusspolen 4 bzw. 6 möglich ist. Um bei Relativbewegung geringe Verschiebekräfte zu gewährleisten, ist zwischen der Kontaktbrücke 10 und dem Anschlusspol 4, 6 ein Zwischenelement 9 angeordnet, welches zweckmäßig als Wärme übertragendes Element in Form eines Gelkissens ausgebildet ist. Dieses Element 9 reduziert die Reibung zwischen der Stirnseite 7 des jeweiligen Anschlusspols 4 bzw. 6 und der Kontaktbrücke 10 einerseits und gewährleistet andererseits eine gute Wärmeübertragung zwischen dem Anschlusspol 4 bzw. 6 und der Kontaktbrücke 10, so dass über den Kühlkanal 11 der gekühlten Kontaktbrücke 10 eine gute Wärmeabfuhr aus der Akkuzelle 3 möglich ist.

Wie die Figuren 6 bis 8 zeigen, ist das freie Ende 17 des aus elektrisch leitendem Material bestehenden Polabschnitts 8 elektrisch leitend mit einer Kontaktplatte 20 eines Kontaktelementes 27 aus elektrisch leitendem Material verbunden, wobei die Kontaktplatte 20 selbst über mehrere Kontaktarme 22 elektrisch leitend an der Kontaktbrücke 10 festgelegt ist. Im Ausführungsbeispiel sind die freien Enden von zwei Kontaktarmen 22 auf der Oberseite 28 der Kontaktbrücke 10 festgelegt, insbesondere verschweißt. Die Kontaktarme 22 überbrücken somit den Spalt 15 zwischen dem Polabschnitt 8 und der Kontaktbrücke 10. Die Kontaktplatte 20 ist bevorzugt - wie die Enden der Kontaktarme 22 auf der Kontaktbrücke 10 - durch Schweißen fixiert, im gezeigten Ausführungsbeispiel auf der Stirnseite 19 des Polabschnitts 8 elektrisch leitend festgelegt. Das Festschweißen der Enden der Kontaktarme 22 auf der Kontaktbrücke 10 und der Kontaktplatte 20 auf dem Polabschnitt 8 kann mit einem Werkzeug in einem Arbeitsgang erfolgen.

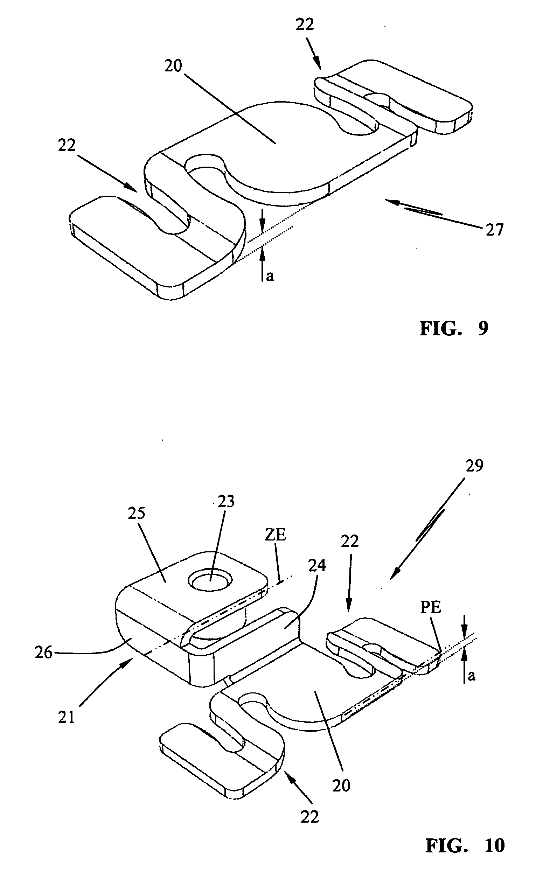

Wie aus der vergrößerten Darstellung der Figuren 9 und 10 ersichtlich, sind an jeder Kontaktplatte 20 zwei Kontaktarme 22 vorgesehen, die einteilig an die Kontaktplatte angeformt sind und sich - bezogen auf den Mittelpunkt der Kontaktplatte - etwa diametral gegenüberliegen. Die an die Kontaktplatte 20 anschließenden Kontaktarme 22 werden vorteilhaft beim Ausstanzen des Elementes gestaltet, vorteilhaft etwa S-förmig ausgebildet, wodurch die Kontaktarme 22 aufgrund ihrer körperlichen Gestalt federnde Eigenschaften haben und unter Ausnutzung der Elastizität des Materials der federnden Kontaktarme 22 eine Relativbewegung der Anschlusspole 4, 6 bzw. der Polabschnitte 8 relativ zur Kontaktbrücke 10 erlauben. Neben ihren elastisch federnden Eigenschaften überbrücken die Kontaktarme 22 auch den Überstand u des freien Endes 17 zur Oberseite 28 der Kontaktbrücke 10, wozu die Kontaktarme 22 vorteilhaft um einen Betrag a aus der Ebene der Kontaktplatte 20 abgekröpft sind. Der Betrag a entspricht zweckmäßig etwa dein Überstand u.

Im gezeigten Ausführungsbeispiel ist der Polabschnitt 8 als in den Anschlusspol 4, 6 eingeschraubter Zylinderbolzen dargestellt; es kann auch zweckmäßig sein, den Polabschnitt 8 einteilig mit dem jeweiligen Anschlusspol 4 bzw. 6 auszubilden.

Wie den Figuren 6 bis 8 zu entnehmen, verläuft der Kühlkanal 11 in Längsrichtung der Kontaktbrücke 10 auf einer seiner Seiten, so dass eine etwa tangentiale Führung des Kühlkanals relativ zur Achse der Polöffnung 18 gegeben ist.

In Fig. 5 ist die Platine 50 eines Batteriemanagementsystems (BMS) gezeigt, über die eine Überwachung jeder Akkuzelle 3 in der Anordnung 5 des Akkublocks 1 erfolgt. Hierzu wird jeder Potenzialpunkt, also das Potenzial jeder Kontaktbrücke 10, an das Batteriemanagementsystem gemeldet, wozu jeweils eine elektrische Verbindung zwischen der Platine 50 und einer Kontaktbrücke 10 hergestellt werden muss. Da - wie vorstehend ausgeführt - im elektrischen Betrieb der Akkuzellen 3 eine Relativbewegung der Pole 4 und 6 benachbarter Akkuzellen auftreten kann, ist zur Vermeidung einer mechanisch starren Verbindung zur Platine 50 des Batteriemanagementsystems vorgesehen, an einem Kontaktelement eine Anschlussfahne 21 anteilig anzuformen, wie am Beispiel des Kontaktelementes 29 in Fig. 10 wiedergegeben ist. Aus der Ebene der Kontaktplatte 20 wird ein einteilig angeformter Materialstreifen 24 abgebogen, an dessen einem, frei auskragenden Ende 26 eine Kontaktzunge 25 abgewinkelt ist, deren Ebene ZE etwa parallel zur Ebene PE der Kontaktplatte 20 des Kontaktelementes 29 liegt. Aufgrund des um etwa 90° abgewinkelten Materialstreifens 24 liegt die Kontaktzunge 25 höher als die Kontaktplatte 20 und überbrückt so den Abstand zwischen der Kontaktplatte 20 und der Platine 50 mit dem Batteriemanagementsystem (Fig. 5).

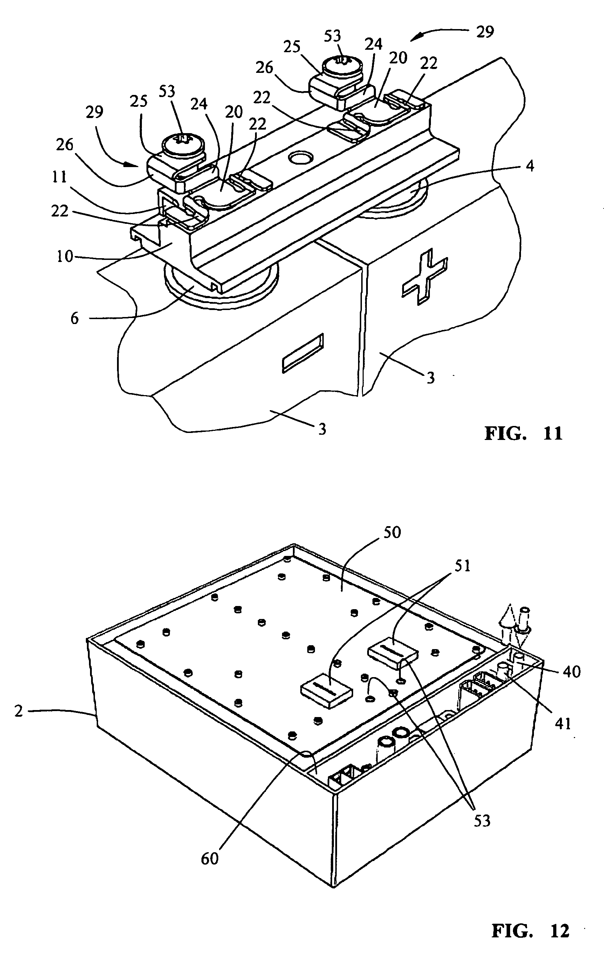

Im gezeigten Ausführungsbeispiel ist die Kontaktzunge 25 als Schraubanschluss 23 ausgebildet, so dass eine Befestigungsschraube 53 durch die Platine hindurch in die Kontaktzunge 25 eingedreht und so der elektrische Kontakt mit den Leiterbahnen auf der Platine 50 hergestellt wird (Figuren 11 und 12).

Aufgrund der Anordnung der abgewinkelten Kontaktzunge 25 am frei auskragenden Ende 26 des Streifens 24 ist im Rahmen der Elastizität des elektrisch leitenden Materials ein Spielausgleich zwischen dem Anschlusspunkt auf der Platine 50 und der Lage der Kontaktzunge 25 gegeben. Die Platine 50 ist nicht starr an die Akkuanordnung angebunden, wodurch - im Rahmen der Elastizität des Kontaktelementes 29 - Ausgleichsbewegungen in alle drei Raumrichtungen (X-, Y- und Z-Richtung) möglich sind. Darüber hinaus ist auch eine gute Schwingungsabkopplung der Platine 50 gegeben.

Wie in Fig. 11 gezeigt, ist die elektrische Verbindung zwischen den Anschlusspolen 4 und 6 und der Kontaktbrücke 10 bevorzugt über Kontaktelemente 29 ausgebildet, so dass das Potenzial der Kontaktbrücke 10 redundant an die Platine 50 des Batteriemanagementsystems weitergegeben wird. Die Kontaktschrauben 53 der Kontaktelemente 29 in Fig. 11 sind in Fig. 12 dargestellt.

## Patentansprüche

1. Akkublock, bestehend aus einer Vielzahl einzelner Akkuzellen (3), die in einem gemeinsamen Gehäuse (2) angeordnet sind, wobei eine Akkuzelle (3) einen positiven und einen negativen Anschlusspol (4, 6) aufweist und elektrisch miteinander zu verbindende Anschlusspole (4, 6) über eine Kontaktbrücke (10) miteinander verbunden sind,
**dadurch gekennzeichnet, dass** ein Polabschnitt (8) eines Anschlusspols (4, 6) in eine Polöffnung (18) der Kontaktbrücke (10) einragt, dass zwischen dem Polabschnitt (8) und der Wandung (16) der Polöffnung (18) ein Spiel (s) ausgebildet ist, und dass das freie Ende (17) des Polabschnitts (8) elektrisch leitend mit einer Kontaktplatte (20) verbunden ist, und die Kontaktplatte (20) mit mindestens einem elastischen Kontaktarm (22) elektrisch leitend an der Kontaktbrücke (10) festgelegt ist, wobei der Kontaktarm (22) einen Spalt (15) zwischen dem Polabschnitt (8) und der Kontaktbrücke (10) überbrückt.

2. Akkublock nach Anspruch 1,
**dadurch gekennzeichnet, dass** die Kontaktplatte (20) auf der Stirnseite (19) des Polabschnitts (8) elektrisch leitend festgelegt, insbesondere festgeschweißt ist.

3. Akkublock nach Anspruch 1 oder 2,
**dadurch gekennzeichnet, dass** der Kontaktarm (22) aus einem elastisch federnden Material ausgebildet ist.

4. Akkublock nach einem der Ansprüche 1 bis 3,
**dadurch gekennzeichnet, dass** der Kontaktarm (22) eine elastische federnde Gestalt hat, insbesondere einen etwa S-förmigen Verlauf aufweist.

5. Akkublock nach einem der Ansprüche 1 bis 4,
**dadurch gekennzeichnet, dass** die Kontaktbrücke (10) auf zumindest einer Teilfläche der Stirnseite (7) eines Anschlusspols (4, 6) aufliegt.

6. Akkublock nach Anspruch 5,
**dadurch gekennzeichnet, dass** zwischen der Kontaktbrücke (10) und der Stirnseite (7) des Anschlusspols (4, 6) ein Zwischenelement (9), insbesondere ein Wärme übertragendes Zwischenelement, vorzugsweise ein Gelkissen angeordnet ist.

7. Akkublock nach einem der Ansprüche 1 bis 6,
**dadurch gekennzeichnet, dass** der Polabschnitt (8) einen Durchmesser (d) aufweist, der kleiner als der Durchmesser (D) des Anschlusspols (4, 6) ist.

8. Akkublock nach einem der Ansprüche 1 bis 7,
**dadurch gekennzeichnet, dass** der Polabschnitt (8) einteilig mit dem Anschlusspol (4, 6) ausgebildet ist.

9. Akkublock nach einem der Ansprüche 1 bis 8,
**dadurch gekennzeichnet, dass** der Polabschnitt (8) und die Polöffnung (18) zumindest teilzylindrisch ausgebildet sind.

10. Akkublock nach einem der Ansprüche 1 bis 9,
**dadurch gekennzeichnet, dass** die Polöffnung (18) als durchgehende, zylindrische Bohrung in der Kontaktbrücke (10) ausgebildet ist.

11. Akkublock nach einem der Ansprüche 1 bis 10,
**dadurch gekennzeichnet, dass** an der Kontaktplatte (20) eine einteilig angeformte, federnde Kontaktzunge (25) ausgebildet ist.

12. Akkublock nach Anspruch 11,
**dadurch gekennzeichnet, dass** die Kontaktzunge (25) an dem freien Ende (26) eines von der Kontaktplatte (20) abgewinkelten Materialstreifens (24) angebunden ist.

13. Akkublock nach Anspruch 11 oder 12,
**dadurch gekennzeichnet, dass** die Kontaktzunge (25) in einer zur Kontaktplatte (20) etwa parallelen Ebene (ZE) liegt.

14. Akkublock nach einem der Ansprüche 11 bis 13,
**dadurch gekennzeichnet, dass** die Kontaktzunge (25) mit einem Schraubanschluss (23) ausgebildet ist.

15. Akkublock, insbesondere nach einem der Ansprüche 1 bis 14,
**dadurch gekennzeichnet, dass** die prismatisch ausgebildeten Akkuzellen (3) in einer vorgegebenen Anordnung (5) positioniert sind und die Anordnung (5) durch eine elastische Spannvorrichtung (30) fixiert ist.

16. Akkublock nach Anspruch 15,
**dadurch gekennzeichnet, dass** die Spannvorrichtung (30) aus die Anordnung (5) begrenzenden Spannplatten (31) besteht, die von zumindest einem die Spannplatten (31) und die Anordnung (5) verspannenden Zugband (33) umgeben sind.

17. Akkublock nach Anspruch 15 oder 16,
**dadurch gekennzeichnet, dass** die Spannvorrichtung (30) mehrere Zugbänder (33) aufweist, die mit seitlichem Abstand (z) zueinander liegen und vorzugsweise in jeweils einer Haltenut (32) einer Spannplatte (31) lagefixiert sind.

18. Akkublock, insbesondere nach einem der Ansprüche 1 bis 17,
**dadurch gekennzeichnet, dass** eine vorgegebene Anordnung (5) aus Akkuzellen (3) von einem Quell-Dichtband (35) umgeben ist, das einen Einbauspalt (37) zwischen der Anordnung (5) der Akkuzellen (3) und einem die Anordnung aufnehmenden Gehäuse (2) etwa spielfrei ausfüllt.

19. Akkublock nach Anspruch 15 und 18,
**dadurch gekennzeichnet, dass** das Quell-Dichtband (35) auf der Außenseite der Spannvorrichtung (30) angeordnet ist.

## Claims

1. Rechargeable battery pack comprising a plurality of individual rechargeable battery cells (3) which are arranged in a shared housing (2), wherein a rechargeable battery cell (3) has a positive and a negative connection pole (4, 6), and connection poles (4, 6) to be electrically connected to each other are connected to each other via a contact bridge (10),
**characterised in that** a pole portion (8) of a connection pole (4, 6) projects into a pole opening (18) of the contact bridge (10), a play (s) is formed between the pole portion (8) and the wall (16) of the pole opening (18), and the free end (17) of the pole portion (8) is electrically conductively connected to a contact plate (20), and the contact plate (20) is fixed with at least one elastic contact arm (22) electrically conductively to the contact bridge (10), wherein the contact arm (22) bridges over a gap (15) between the pole portion (8) and the contact bridge (10).

2. Rechargeable battery pack according to claim 1,
**characterised in that** the contact plate (20) is electrically conductively fixed, in particular fixedly welded, on the end face (19) of the pole portion (8).

3. Rechargeable battery pack according to claim 1 or 2,
**characterised in that** the contact arm (22) is formed from an elastically resilient material.

4. Rechargeable battery pack according to one of claims 1 to 3,
**characterised in that** the contact arm (22) is in an elastically resilient form, in particular having an approximately S-shaped progression.

5. Rechargeable battery pack according to one of claims 1 to 4,
**characterised in that** the contact bridge (10) lies on at least a partial area of the end face (7) of a connection pole (4, 6).

6. Rechargeable battery pack according to claim 5,
**characterised in that** an intermediate element (9), in particular a heat-transferring intermediate element, preferably a gel pad, is arranged between the contact bridge (10) and the end face (7) of the connection pole (4, 6).

7. Rechargeable battery pack according to one of claims 1 to 6,
**characterised in that** the pole portion (8) has a diameter (d) which is smaller than the diameter (D) of the connection pole (4, 6).

8. Rechargeable battery pack according to one of claims 1 to 7,
**characterised in that** the pole portion (8) is formed integrally with the connection pole (4, 6).

9. Rechargeable battery pack according to one of claims 1 to 8,
**characterised in that** the pole portion (8) and the pole opening (18) are formed at least partially cylindrically.

10. Rechargeable battery pack according to one of claims 1 to 9,
**characterised in that** the pole opening (18) is formed as a continuous cylindrical bore in the contact bridge (10).

11. Rechargeable battery pack according to one of claims 1 to 10,
**characterised in that** an integrally formed, resilient contact tongue (25) is formed on the contact plate (20).

12. Rechargeable battery pack according to claim 11,
**characterised in that** the contact tongue (25) is attached at the free end (26) of a material strip (24) angled away from the contact plate (20).

13. Rechargeable battery pack according to claim 11 or 12,
**characterised in that** the contact tongue (25) lies in a plane (ZE) approximately parallel to the contact plate (20).

14. Rechargeable battery pack according to one of claims 11 to 13,
**characterised in that** the contact tongue (25) is formed with a screw connection (23).

15. Rechargeable battery pack, in particular according to one of claims 1 to 14,
**characterised in that** the prismatic rechargeable battery cells (3) are positioned in a predefined assembly (5) and the assembly (5) is fixed by an elastic clamping device (30).

16. Rechargeable battery pack according to claim 15,
**characterised in that** the clamping device (30) consists of clamping plates (31) delimiting the assembly (5), which clamping plates (31) are surrounded by at least one tension strap (33) bracing the clamping plates (31) and the assembly (5).

17. Rechargeable battery pack according to claim 15 or 16,
**characterised in that** the clamping device (30) has a plurality of tension straps (33) which lie at a lateral distance (z) from each other and are preferably fixed in position in a respective retaining groove (32) of a clamping plate (31).

18. Rechargeable battery pack, in particular according to one of claims 1 to 17,
**characterised in that** a predefined array (5) of rechargeable battery cells (3) is surrounded by an expansion sealing tape (35) which fills approximately without play an insertion gap (37) between the array (5) of the rechargeable battery cells (3) and a housing (2) receiving the array.

19. Rechargeable battery pack according to claims 15 and 18,
**characterised in that** the expansion sealing tape (35) is arranged on the outer side of the clamping device (30).

## Revendications

1. Bloc accumulateur composé de plusieurs éléments accumulateurs (3) qui sont disposés dans un boîtier commun (2), étant précisé qu'un élément accumulateur (3) comporte des pôles de raccordement positif et négatif (4, 6) et que les pôles de raccordement (4, 6) à relier électriquement l'un à l'autre sont reliés l'un à l'autre par un pont de contact (10),
**caractérisé en ce qu'**une partie de pôle (8) d'un pôle de raccordement (4, 6) pénètre dans une ouverture de pôle (18) du pont de contact (10), **en ce qu'**un jeu (s) est formé entre la partie de pôle (8) et la paroi (16) de l'ouverture de pôle (18), et **en ce que** l'extrémité libre (17) de la partie de pôle (8) est reliée de manière conductrice d'électricité à une plaque de contact (20), et la plaque de contact (20) est reliée de manière conductrice d'électricité au pont de contact (10) avec un bras de contact élastique (22), étant précisé que le bras de contact (22) couvre un interstice (15) entre la partie de pôle (8) et le pont de contact (10).

2. Bloc accumulateur selon la revendication 1,
**caractérisé en ce que** la plaque de contact (20) est fixée, en particulier par soudage, de manière conductrice d'électricité sur le côté frontal (19) de la partie de pôle (8).

3. Bloc accumulateur selon la revendication 1 ou 2,
**caractérisé en ce que** le bras de contact (22) est formé à partir d'un matériau faisant ressort élastiquement.

4. Bloc accumulateur selon l'une des revendications 1 à 3,
**caractérisé en ce que** le bras de contact (22) a une forme faisant ressort élastiquement, en particulier à peu près en S.

5. Bloc accumulateur selon l'une des revendications 1 à 4,
**caractérisé en ce que** le pont de contact (10) est posé sur au moins une surface partielle du côté frontal (7) d'un pôle de raccordement (4, 6).

6. Bloc accumulateur selon la revendication 5,
**caractérisé en ce qu'**il est prévu, entre le pont de contact (10) et le côté frontal (7) du pôle de raccordement (4, 6), un élément intermédiaire (9), en particulier un élément intermédiaire transmetteur de chaleur, de préférence un coussinet de gel.

7. Bloc accumulateur selon l'une des revendications 1 à 6,
**caractérisé en ce que** la partie de pôle (8) présente un diamètre (d) qui est plus petit que le diamètre (D) du pôle de raccordement (4, 6).

8. Bloc accumulateur selon l'une des revendications 1 à 7,
**caractérisé en ce que** la partie de pôle (8) est réalisée d'une seule pièce avec le pôle de raccordement (4, 6).

9. Bloc accumulateur selon l'une des revendications 1 à 8,
**caractérisé en ce que** la partie de pôle (8) et l'ouverture de pôle (18) sont au moins en partie cylindriques.

10. Bloc accumulateur selon l'une des revendications 1 à 9,
**caractérisé en ce que** l'ouverture de pôle (18) est conçue comme un perçage cylindrique traversant dans le pont de contact (10).

11. Bloc accumulateur selon l'une des revendications 1 à 10,
**caractérisé en ce qu'**une languette de contact élastique (25) est rapportée, d'une seule pièce, sur la plaque de contact (20).

12. Bloc accumulateur selon la revendication 11,
**caractérisé en ce que** la languette de contact (25) est rattachée sur l'extrémité libre (26) d'une bande de matériau (26) coudée à partir de la plaque de contact (20).

13. Bloc accumulateur selon la revendication 11 ou 12,
**caractérisé en ce que** la languette de contact (25) se trouve dans un plan (ZE) à peu près parallèle à la plaque de contact (20).

14. Bloc accumulateur selon l'une des revendications 11 à 13,
**caractérisé en ce que** la languette de contact (25) est pourvue d'un raccord à vis (23).

15. Bloc accumulateur selon l'une des revendications 1 à 14,
**caractérisé en ce que** les éléments accumulateurs (3) prismatiques sont disposés dans un dispositif prédéfini (5), et ce dispositif (5) est fixé par un dispositif de serrage élastique (30).

16. Bloc accumulateur selon la revendication 15,
**caractérisé en ce que** le dispositif de serrage (30) se compose de plaques de serrage (31) qui délimitent le dispositif (5) et qui sont entourées par au moins un tirant (33) contraignant les plaques de serrage (31) et le dispositif (5).

17. Bloc accumulateur selon la revendication 15 ou 16,
**caractérisé en ce que** le dispositif de serrage (30) comporte plusieurs tirants (33), qui présentent un écartement latéral mutuel (z) et qui sont fixés dans leur position de préférence dans une rainure de fixation (32) d'une plaque de serrage (31).

18. Bloc accumulateur selon l'une des revendications 1 à 17,
**caractérisé en ce qu'**un dispositif prédéfini (5) d'éléments accumulateurs (3) est entouré par une bande d'étanchéité gonflante (35) qui remplit sans jeu un interstice de montage (37) entre le dispositif (5) d'éléments accumulateurs (3) et un boîtier (2) recevant le dispositif (5).

19. Bloc accumulateur selon les revendications 15 et 18,
**caractérisé en ce que** la bande d'étanchéité gonflante (35) est disposée sur le côté extérieur du dispositif de serrage (30).
